# EUROPEAN PATENT SPECIFICATION

(11) **EP 3 211 403 B1**
(45) Date of publication and mention of the grant of the patent: **28.10.2020**
(21) Application number: 15853487.5
(22) Date of filing: 10.08.2015
(51) Int. Cl.: G01N 21/93, G01N 21/956, G01N 21/88

(54) **EXTERIOR INSPECTION DEVICE**
AUSSENINSPEKTIONSVORRICHTUNG
DISPOSITIF D'INSPECTION EXTÉRIEURE

(30) Priority: 23.10.2014 JP 2014216015
(43) Date of publication of application: 30.08.2017
(73) Proprietor: Purex Co., Ltd., Kagawa 761-8032 (JP)
(72) Inventor: ENAMI, Yasuhiko, Takamatsu-shi Kagawa 761-8032 (JP); HAYASHIDA, Yo-o, Takamatsu-shi Kagawa 761-8032 (JP)
(74) Representative: Klang, Alexander H.
(86) International application number: PCT/JP2015/004005
(87) International publication number: WO 2016/063439

(56) References cited:
- WO-A1-01/22062
- WO-A1-2007/058102
- JP-A- H06 258 225
- JP-A- 2005 169 139
- JP-A- 2011 106 995
- US-A1- 2003 160 877
- US-B1- 6 657 722

## Description

### TECHNICAL FIELD

The present invention relates to an exterior inspection device. More specifically, the invention relates to an exterior inspection device including an automatic calibration function of a camera.

### BACKGROUND ART

Exterior inspection devices using a camera nowadays are used in every field. Typical examples thereof include finish lines of linen supply plants, production lines of semiconductor wafer, inspection lines of printed matter, production lines of printed circuit boards, and the like.

A camera to be used in an exterior inspection device captures an image in such fashion that the optical power spectrum of an actual sight is reproduced as it is. However, since the human vision views a subject with natural hues, images captured by such cameras may be unnatural in some cases.

When an image captured by a camera has no naturalness similar to that by the human eyes, even a subject that seems abnormal for the human eyes may be unrecognizable as abnormal by image information captured by the camera, making it impossible to achieve a correct exterior inspection. For this reason, the camera is subject to compensation to obtain a desired hue. This compensation is called white balance. It is noted that the term, white balance, is derived from the compensation typified by the way how pure white subjects are shot.

With various types of exterior inspection devices also, use of a camera involves white balance adjustment. The following related arts have been available for the white balance adjustment.

As to a related art of JP 2009-115681 A, it is described that the white balance process is performed by personal computer. However, there is no disclosure as to how a subject serving as a reference of compensation (so-called calibration reference plate) is treated.

As to a related art of JP 2014-89156 A, it is described that the white balance process is controlled on a basis of spectral characteristics of reflected light at a workpiece surface. However, there are no disclosures of concrete techniques as to which state of the workpiece is referenced, or how the workpiece is treated.

In this connection, whereas a color line camera with image sensors arrayed in line is used for exterior inspection devices, the white balance in such color line cameras is, in general, slightly varied by temperature drifts or secular changes.

In such cases, continuing to execute exterior inspections without awareness of loss of the white balance would make it impossible to achieve correct inspections, as a problem.

US 2003/0160877 A1 discloses an imaging device installed on an autonomously movable body which comprises an image-taking section for taking images of the surrounding environment, and an object detecting section for detecting objects and obstacles by processing the obtained images. The imaging device comprises: an image processing section to perform color detection of the images taken by the image-taking section; a white calibration plate for the image-taking section to perform color correction; and a calibration plate control section for moving the calibration plate into a field of view of the image-taking section, wherein it is determined whether color information which is sufficient to perform color detection is obtainable from the images taken by the image-taking section, and color correction is performed using the calibration plate when it is determined that the images taken by the image-taking section do not provide color information sufficient to perform color detection. JP 2011 106995 A describes an exterior inspection device comprising: a camera, an inspection reference plane, a light source, a calibration reference plate, and a control unit for issuing a calibration command to the camera, a conveyor for feeding an object to be inspected and providing a discriminative signal for discriminating between a driven state and a non-driven state to the control unit wherein the camera captures light reflected on the inspection reference plane or reflected on the calibration reference plate.

### SUMMARY OF INVENTION

### Technical Problem

The present invention having been accomplished in view of the above-described circumstances, an object of the invention is to provide an exterior inspection device capable of executing inspections with an optimum white balance at all times.

### Solution to Problem

According to the invention, there is provided an exterior inspection device as set forth in claim 1.

In a preferred embodiment of the invention, the control unit issues an adjustment command for adjusting light quantity of the light source when the calibration reference plate is at the calibration position.

### Advantageous Effects of Invention

When the advance/retraction mechanism has moved the calibration reference plate to the calibration position, the control unit issues a white balance adjustment command to the camera. Thus, the white balance adjustment can be fulfilled automatically without involving human work.

On an occasion of a non-inspection state, the control unit actuates the advance/retraction mechanism to move the calibration reference plate to the calibration position. Thus, the white balance adjustment can be fulfilled without involving human work.

On an occasion of the white balance adjustment, the control unit issues a command for adjusting the light quantity of the light source. Thus, the white balance adjustment can be fulfilled correctly.

### BRIEF DESCRIPTION OF DRAWINGS

Fig. 1 is a basic configuration explanatory view of an exterior inspection device according to the present invention;
Fig. 2 is an explanatory view of an exterior inspection device according to an embodiment of the invention; and
Fig. 3 is an enlarged view of a main part of Fig. 2.

### DESCRIPTION OF EMBODIMENTS

Hereinbelow, an embodiment of the present invention will be described with reference to the accompanying drawings.

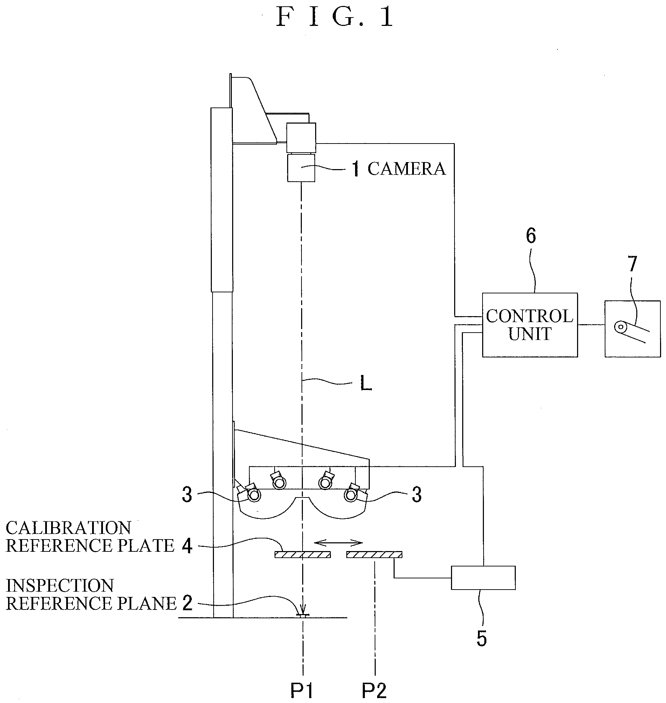

A basic configuration of the present invention will be described with reference to Fig. 1.

The exterior inspection device of the invention includes a camera 1, an inspection reference plane 2 placed at an image pickup position of the camera 1, and light sources 3 for applying light to the inspection reference plane 2. A line L between the camera 1 and the inspection reference plane 2 is a surface inspection line. These component members are those included in ordinary exterior inspections devices.

The camera 1 has a built-in white balance adjustment function.

The light sources 3 are LEDs, fluorescent lamps or the like plus a control board therefor. The control board has a built-in function for switching over between normal inspection-use light quantity and white balance-use light quantity.

The invention includes the following members in addition to the above-described ones.

Reference sign 4 denotes a calibration reference plate, and 5 denotes an advance/retraction mechanism therefor. Reference sign 6 denotes a control unit which has a control function for automatically performing white balance adjustment.

The calibration reference plate 4 is a subject serving as a reference for white balance adjustment. Therefore, a white flat plate as an example is used therefor.

The advance/retraction mechanism 5 is a driving device for advancing and retracting the calibration reference plate 4 between a calibration position P1 and a retracted position P2 retracted therefrom. Although any driving device, only if capable of advancing and retracting the calibration reference plate 4, may be used therefor, yet an air cylinder, various types of electric actuators, and the like are preferable from the viewpoint of driving the lightweight calibration reference plate 4.

The control unit 6 is implemented by an information processing device such as a computer. Then, the control unit 6 has the following control functions:
1) issuing a white balance adjustment command to the camera 1,
   where since the camera 1 has a built-in white balance adjustment function, issuing the adjustment command allows white balance adjustment to be autonomously performed;
2) issuing motion commands for advancing motion and retracting motion of the advance/retraction mechanism 5; and
3) performing light quantity adjustment for the light sources 3,
   where since the light sources 3 have a built-in light quantity adjustment function, issuing an adjustment command allows the light quantity to be autonomously adjusted to one suitable for white balance adjustment.

A discriminative signal for discriminating between driven state and non-driven state is inputted to the control unit 6 from a conveyor 7 which feeds inspection objects to be inspected. During the execution of a normal workpiece inspection, i.e. exterior inspection, the conveyor 7 is being driven. On the other hand, during a non-inspection time, the conveyor 7 is not being driven, so that the discriminative signal indicative of the non-driven state is inputted to the control unit 6. The discriminative signal may be implemented by using any arbitrary means such as a switch which turns on upon a halt of the conveyor 7 or a tachometer which involves rotation and non-rotation of a roller.

According to the invention, during' the non-driven state of the conveyor 7, the control unit 6 starts various operations involved in white balance adjustment.

More specifically, a state that the conveyor 7 is halted develops at an everyday operation start, or during a time interval occurring after inspection of seriate inspected articles and before arrival of a next inspection article, or other occasions.

During this non-inspection time, three command signals are automatically issued from the control unit 6.

First, the advance/retraction mechanism 5 operates so that the calibration reference plate 4 positioned at the retracted position P2 is advanced to the calibration position P1. With the calibration set ready in this way, light quantity adjustment for the light sources 3 is commanded while a white balance adjustment command is issued to the camera 1. As a result of this, the camera 1 adjusts the white balance on a basis of its built-in functions under proper light quantity.

Upon an end of the white balance adjustment, the control unit 6 issues a retraction signal to the advance/retraction mechanism 5 to make the calibration reference plate 4 retracted. Then, the light quantity of the light sources 3 is restored to a normal inspection-use light quantity, where the white balance adjustment of the camera 1 is ended.

Through the above-described process, according to the invention, the white balance adjustment can be achieved automatically without involving human work.

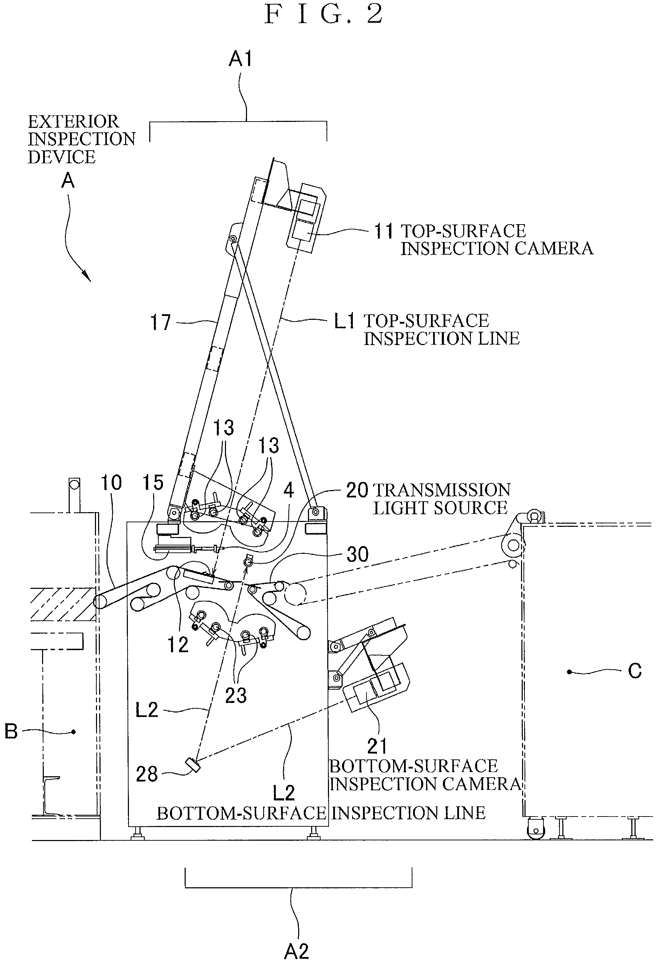

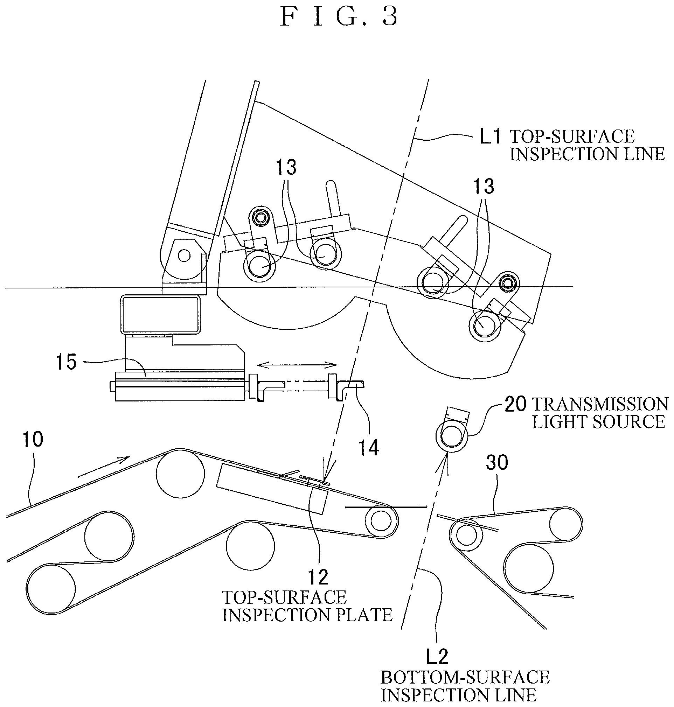

Next, an embodiment of the invention will be described with reference to Figs. 2 and 3.

Provided by the embodiment is an exterior inspection device A in a fabric-article finish line of a linen supply plant, the exterior inspection device A being installed between a preceding-step device B (e.g., ironing device) and a succeeding-step device C (e.g., folding device). The exterior inspection device A includes a top-surface inspection device A1 for inspecting a top surface of an inspection object, and a bottom-surface inspection device A2 for inspecting its bottom surface.

The exterior inspection device A is provided, in its main body, with an inlet-side conveyor 10 for feeding in inspection-object fabric articles such as sheets, wrapping cloths and pillow cases from the preceding-step device B as well as with an outlet-side conveyor 30 for feeding those articles out to the succeeding-step device C.

First, the top-surface inspection device A1 will be described.

A top-surface inspection plate 12 is placed on an upper surface of the inlet-side conveyor 10. When an inspection-object fabric article passes on the upper surface of the top-surface inspection plate 12, an exterior inspection for the fabric article is executed. Therefore, the upper surface of the top-surface inspection plate 12 corresponds to the inspection reference plane 2 as defined in the appended claims.

A top-surface inspection camera 11 is installed above the top-surface inspection plate 12. The top-surface inspection camera 11 is attached to a distal end of a pillar 17 in such a way that its lens is directed downward. A top-surface inspection line L1 passes between the lens of the top-surface inspection camera 11 and the top-surface inspection plate 12. Also, light sources 13 are attached in lower part of the pillar 17. The light sources 13 illuminate a surface of the top-surface inspection plate 12 with light.

An advance/retraction mechanism 15 is placed at a root of the pillar 17 via a bracket. The advance/retraction mechanism 15 is implemented by an air cylinder, with a calibration reference plate 14 mounted on its piston rod. As the calibration reference plate 14 is advanced, the calibration reference plate 14 is brought to a position passing through the top-surface inspection line L1. This position is the calibration position. When the air cylinder is contracted to make the calibration reference plate 14 retracted, the calibration reference plate 14 comes to the retracted position.

A bottom-surface inspection device A2 is placed on an outlet side of the top-surface inspection device A1.

A transmission light source 20 is placed at a slightly upper portion within a space between the inlet-side conveyor 10 and the outlet-side conveyor 30, and light sources 23 are placed in slightly lower part of that space. A bottom-surface inspection camera 21 is mounted on a side wall of the main body of the exterior inspection device. An optical path between the bottom-surface inspection camera 21 and the transmission-use light sources 23 is connected up via a reflecting mirror 28. This optical path serves as a bottom-surface inspection line L2.

In Fig. 2, although neither a calibration reference plate nor an advance/retraction mechanism is provided for the bottom-surface inspection line L2, yet those members may be provided also for the bottom-surface inspection device A2 as in the top-surface inspection device A1.

According to the exterior inspection device A of the above-described first embodiment, when the control unit 6 comes to a non-inspection state, the advance/retraction mechanism 5 is actuated so that the calibration reference plate 4 is brought to the calibration position. Therefore, the white balance adjustment can be achieved without involving human work. Since the control unit 6 issues a command for adjusting the light quantity of the light sources 3 on an occasion of the white balance adjustment, a correct white balance adjustment can be fulfilled. When the advance/retraction mechanism 5 has moved the calibration reference plate 4 to the calibration position, the control unit 6 issues a white balance adjustment command to the camera 1. Therefore, the white balance adjustment can be fulfilled automatically without involving human work.

### (Other embodiments)

The foregoing embodiment has been applied to a sheet finish line of a linen supply plant. Otherwise, the invention is applicable also to exterior inspection devices in various technical fields such as production lines of semiconductor wafer, inspection lines of printed matter, and production lines of printed circuit boards.

## Claims

1. An exterior inspection device (A) comprising:
a camera (1, 11);
an inspection reference plane (2, 12);
a light source (3, 13);
a calibration reference plate (4, 14);
an advance/retraction mechanism (5) for advancing and retracting the calibration reference plate (4, 14) between a calibration position (P1) between the camera (1, 11) and the inspection reference plane (2, 12) within an image-taking area of the camera (1) and a retracted position (P2) retracted therefrom; and
a control unit (6) for issuing a white balance adjustment command to the camera (1, 11) when the calibration reference plate (4, 14) is at the calibration position (P1);
a conveyor (7, 10) for feeding an object to be inspected and providing a discriminative signal for discriminating between a driven state and a non-driven state to the control unit (6);
wherein
the camera (1, 11) captures light reflected on the inspection reference plane (2, 12) when the calibration reference plate (4, 14) is in the retracted position (P2) or reflected on the calibration reference plate (4, 14) when the calibration reference plate (4, 14) is in the calibration position (P1);
the control unit (6) issues to the advance/retraction mechanism (5) a drive command for moving the calibration reference plate (4) to the calibration position (P1) when the conveyor (7, 10) is not being driven and the discriminating signal indicates the non-driven state so that white balance adjustment is carried out using the calibration reference plate (4).

2. The exterior inspection device (A) in accordance with claim 1, wherein
the control unit (6) is configured to issue an adjustment command for adjusting light quantity of the light source (3, 13) when the calibration reference plate (4, 14) is at the calibration position (P1).

## Patentansprüche

1. Außenuntersuchungsvorrichtung (A), die Folgendes aufweist:
eine Kamera (1, 11);
eine Untersuchungsreferenzebene (2, 12);
eine Lichtquelle (3, 13);
eine Kalibrierungsreferenzplatte (4, 14);
einen Vorschub/Rückzugsmechanismus (5) zum Vorschieben und Zurückziehen der Kalibrierungsreferenzplatte (4, 14) zwischen einer Kalibrierungsposition (P1) zwischen der Kamera (1, 11) und der Untersuchungsreferenzebene (2, 12) innerhalb eines Bildaufnahmebereiches der Kamera (1) und einer Rückzugsposition (P2), die dem gegenüber zurückgezogen ist; und
eine Steuereinheit (6) zum Ausgeben eines Weißausgleichseinstellungsbefehls an die Kamera (1, 11), wenn die Kalibrierungsreferenzplatte (4, 14) in der Kalibrierungsposition (P1) ist;
eine Fördervorrichtung (7, 10) zum Fördern eines Objektes, welches untersucht werden soll, und zum Vorsehen eines Unterscheidungssignals zur Unterscheidung zwischen einem angetriebenen Zustand und einem nicht angetriebenen Zustand an die Steuereinheit (6);
wobei
die Kamera (1, 11) Licht aufnimmt, welches auf der Untersuchungsreferenzebene (2, 12) reflektiert wird, wenn die Kalibrierungsreferenzplatte (4, 14) in der zurückgezogenen Position (P2) ist, oder welches auf der Kalibrierungsreferenzplatte (4, 14) reflektiert wird, wenn die Kalibrierungsreferenzplatte (4, 14) in der Kalibrierungsposition (P1) ist;
wobei die Steuereinheit (6) an den Vorschub/Rückzugsmechanismus (5) einen Antriebsbefehl ausgibt, um die Kalibrierungsreferenzplatte (4) in die Kalibrierungsposition (P1) zu bewegen, wenn die Fördervorrichtung (7, 10) nicht angetrieben wird und das Unterscheidungssignal den nicht angetriebenen Zustand anzeigt, so dass eine Weißausgleichseinstellung unter Verwendung der Kalibrierungsreferenzplatte (4) ausgeführt wird.

2. Außenuntersuchungsvorrichtung (A) nach Anspruch 1, wobei
die Steuereinheit (6) so konfiguriert ist, dass sie einen Einstellungsbefehl zum Einstellen einer Lichtmenge der Lichtquelle (3, 13) ausgibt, wenn die Kalibrierungsreferenzplatte (4, 14) in der Kalibrierungsposition (P1) ist.

## Revendications

1. Dispositif d'inspection extérieur (A) comprenant :
une caméra (1, 11) ;
un plan de référence d'inspection (2, 12) ;
une source de lumière (3, 13) ;
une plaque de référence de calibrage (4, 14) ;
un mécanisme d'avance/rétraction (5) destiné à faire avancer et rétracter la plaque de référence de calibrage (4, 14) entre une position de calibrage (P1) entre la caméra (1, 11) et le plan de référence d'inspection (2, 12) dans une région de prise d'image de la caméra (1) et une position rétractée (P2) rétractée à partir de celle-ci ; et
une unité de commande (6) destinée à assurer une commande de réglage de la balance des blancs à la caméra (1, 11) quand la plaque de référence de calibrage (4, 14) est à la position de calibrage (P1) ;
un convoyeur (7, 10) destiné à amener un objet à inspecter et à fournir un signal de discrimination destiné à discriminer entre un état entraîné et un état non entraîné à l'unité de commande (6) ;
dans lequel
la caméra (1, 11) capture la lumière réfléchie sur le plan de référence d'inspection (2, 12) quand la plaque de référence de calibrage (4, 14) est dans la position rétractée (P2) ou réfléchie sur la plaque de référence de calibrage (4, 14) quand la plaque de référence de calibrage (4, 14) est dans la position de calibrage (P1) ;
l'unité de commande (6) fournit au mécanisme d'avance/rétraction (5) une commande d'entraînement destinée à déplacer la plaque de référence de calibrage (4) vers la position de calibrage (P1) quand le convoyeur (7, 10) n'est pas entraîné et le signal de discrimination indique l'état non entraîné de sorte que le réglage de la balance des blancs est mis en œuvre en utilisant la plaque de référence de calibrage (4).

2. Dispositif d'inspection extérieur (A) selon la revendication 1, dans lequel
l'unité de commande (6) est configurée pour fournir une commande de réglage destinée à régler la quantité de lumière de la source de lumière (3, 13) quand la plaque de référence de calibrage (4, 14) est à la position de calibrage (P1).
